# EUROPEAN PATENT APPLICATION

(11) **EP 1 684 472 A1**
(43) Date of publication of application: **26.07.2006**
(21) Application number: 05290117.0
(22) Date of filing: 19.01.2005
(51) Int. Cl.: H04L 12/56

(54) **Routing method**

(71) Applicant: ALCATEL, 75008 Paris (FR)
(72) Inventor: Ciavaglia, Laurent, 77300 Fontainebleau (FR); Dotaro, Emmanuel, 91370 Verrieres Le Buisson (FR); Audouin, Olivier, 92130 Issy les Moulineaux (FR); Bouabdallah, Nizar, 92800 Puteaux (FR)
(74) Representative: Rausch, Gabriele

(57) **Abstract**

A method for routing traffic in a network comprising a plurality of nodes and a plurality of data lines that extend between adjacent ones of said nodes, the traffic being formed of traffic connections between pairs of nodes referred to as terminal nodes, comprises the steps of
a) selecting a pair of said terminal nodes and determining a shortest path between them (S1-S4);
b) selecting (S6) a new node from said plurality which is not part of the path and inserting (S8) the new node between two adjacent nodes of the path;
c) repeating step b) until at least all terminal nodes are included in the path;
d) routing at least part of said traffic on said path (S11-S14).

## Description

The present invention is concerned with a method for routing data traffic in a network which comprises a plurality of nodes and a plurality of data lines by which the nodes are connected to each other.

In the context of the present application, a data line is a point-to-point data transport resources that extends from one node to another without passing through intermediate nodes, and two nodes are referred to as adjacent if there is a data line that extends from one of them to the other.

In such a network, each node must be able to communicate with any other node, but the rate at which data are exchanged between two nodes may vary widely from one pair to another. In order to communicate, the node pairs must have bandwidth of the data lines assigned to traffic connections between them. This bandwidth is conventionally managed in a network in the form of discrete units, wherein one unit is either assigned entirely to a given node pair or is not assigned at all. Such units may e. g. be a time slot, if the data lines operate on a TDMA basis, a carrier frequency in a WDM data line etc. In particular, in fibre optical communication systems, a carrier wavelength is often the smallest unit to be managed.

In order to keep the processing effort involved with management of the traffic connections as low as possible, it would be desirable to assign only a small number of large bandwidth units. If this is done, the efficiency of the network will be rather low, because if the data traffic of a given node pair does not fill the entire bandwidth unit assigned to this pair, the idle portion of the bandwidth can not be used for communication between other nodes which may have data to transmit. On the other hand, if the bandwidth units are made small in order to increase the capacity utilisation of the data lines, the amount of management processing increases. Further, since management of the resources of the network requires signalisation between the nodes, the bandwidth available for transmission of payload data decreases.

A way out of this dilemma has been suggested in EP 1 349 416 A1. In this document, it is suggested to form a group of interconnected nodes in a network, to assign a certain amount of bandwidth units to this group, and to handle the assigned bandwidth as a generalized bus. According to this prior art method, the bus has one receiver node, and all other nodes are transmitter nodes which share the bandwidth of the bus for sending data to the receiver node. A bus, in the context of this prior art, is not necessarily a hardware structure but may be implemented by logical means alone. It may comprise only a small number of nodes in a potentially large network. These nodes are ranged on the bus in a daisy chain configuration, i. e. there is a first transmitter node at which the bus begins, and a receiver node where it ends, and data will be forwarded from the first transmitter node along a fixed path extending through all other transmitter nodes. Generally, the bus will only occupy a mall fraction of the bandwidth, e.g. a single carrier wavelength in case of wavelength division multiplex transmission, of the data lines that support it.

The concept of EP 1 349 416 Al has been generalized to include buses where every node can be receiver and/or transmitter node. According to this generalized concept, payload data are transmitted on the bus accompanied by a hop count number indicating the number of nodes they have to pass on the bus before reaching the destination. At each intermediate node, the hop count number is decreased by one, and when it is zero, the receiver node is reached amd the payload data are dropped. If two buses of this type are provided that extend through the same nodes in opposite directions, all these nodes can communicate bidirectionally with each other.

The object of the present invention is to provide a method for routing a bus in a multi-node network.

The object is achieved by a method as defined in claim 1. It is assumed here that the nodes which are desired to form part of the bus, because they have data to send or to receive, are defined in advance; they will be referred to in the following as terminal nodes in order to distinguish them from those nodes of the network that do not or at least not necessarily form part of the bus. The method comprises the steps of
- a): selecting a pair of terminal nodes and determining a shortest path between them.
- b): selecting a new node among the nodes of the network which is not part of the path and inserting the new node between adjacent nodes of the path;
- c): repeating step b) until at least all terminal nodes are included in the path;
- d): routing at least part of said traffic on said path.

Preferably, step a) comprises the steps of
- aa): establishing a set of pairs of terminal nodes;
- ab): determining the shortest path between its nodes for each terminal node pair; and
- ac): selecting among all terminal nodes not yet selected, a pair for which the path is longest.

Preferably, the terminal node pair set should comprise all possible combinations of two terminal nodes. In this way, the method always begins by selecting in step a) the terminal nodes which are farthest apart and tries to insert all other terminal nodes in between, so that there is a good chance that the path obtained after finishing step c) for the first time is the shortest possible one.

In step b), a node may be selected as the new node if it is adjacent to two mutually adjacent nodes of the path, and be inserted between these two mutually adjacent nodes. This method is appropriate if the percentage of terminal nodes in the network is high, i. e. if there is a high probability that any new node selected in this way is a terminal node itself.

If the percentage of terminal nodes is low, it may be more appropriate to select a node as the new node in step b) only if it is a terminal node.

In this latter case, step b) preferably comprises the steps of calculating the shortest bypass between two nodes which are adjacent to each other in the current path, and which bypath extends from one of the two adjacent nodes to the other via the selected new node, and of inserting the bypass between said two nodes.

In either case, when all terminal nodes have been included in the path, not every node is necessarily a terminal node, and it may be possible to reduce the length of the path without affecting its functionality. Therefore, further steps of
- e): checking, for every node of the path, whether it is a terminal node, and, if not,
- f): checking, whether the node can be removed from the path without destroying the connectivity of the path, and if yes,
- g): removing the node from the path
are carried out.

These additional steps may be carried out between steps c) and d) or after step d).

A given node may be determined to be removable in step f) if the path comprises a predecessor and a successor node of that given node, and if the predecessor and successor nodes are mutually adjacent.

If there are several consecutive nodes in the path which are not terminal nodes, it may be more efficient to check whether for a given non-terminal node there is a path section between a predecessor terminal node and a successor terminal node of the given node, which is shorter than the corresponding path section of the current path that extends via the given node, and to replace this path section of the current path by the shorter one.

The total bandwidth needed for accommodating all traffic connections between the terminal nodes may be more than the bandwidth supported by the obtained path. In this case, only some of said traffic connections are indeed assigned to the path, and for the remaining traffic connections, the procedure is repeated. Repetitions may be carried out until all traffic connections have been assigned to a path.

Further features and advantages of the invention will become apparent from the subsequent description of embodiments thereof referring to the appended drawings.
- Fig. 1: is a schematic diagram of a network in which the method of the invention can be carried out;

- Fig. 2: is a list of shortest paths established for various pairs of terminal nodes;
- Fig. 3: is the network of Fig. 1 with a preliminary path;
- Figs. 4, 5: illustrate stages of the process of extending the preliminary path;
- Fig. 6: illustrates the process of checking the bandwidth of the selected path;
- Fig. 7: shows the network with a shortened path; and
- Fig. 8: is a flowchart of a preferred embodiment of the method of the invention.

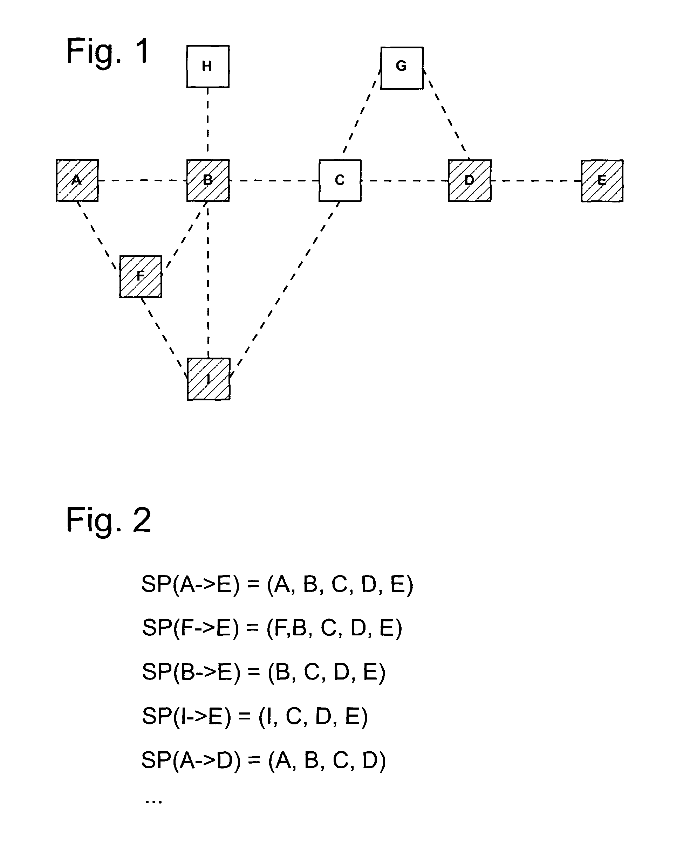

In Fig. 1, A, B, C,....., I represent nodes of a telecommunication network, and dashed lines extending from one node to another represent data lines, e. g. optical fibres. A bus is to be routed among hatched nodes A, B, D, E, F, I, which is capable of supporting a predetermined set of traffic connections between nodes. A traffic connection is characterized by its starting and destination nodes and by its bandwidth.

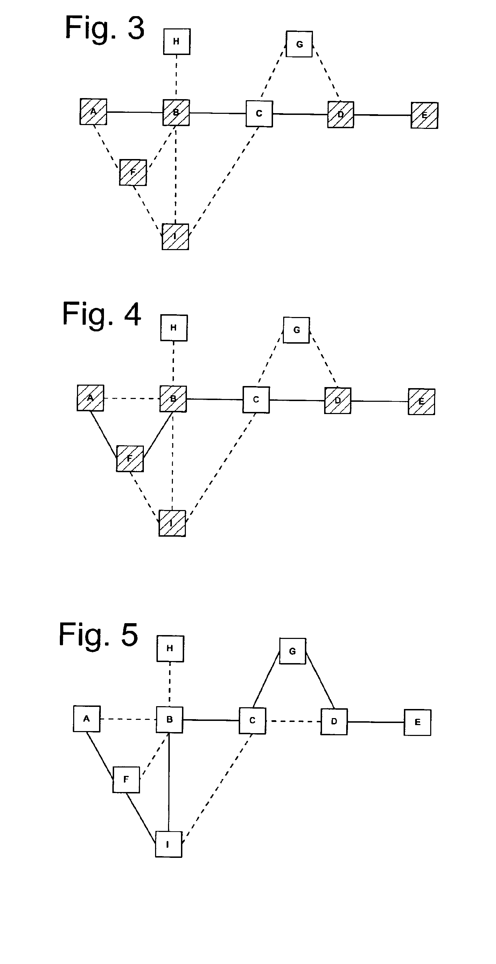

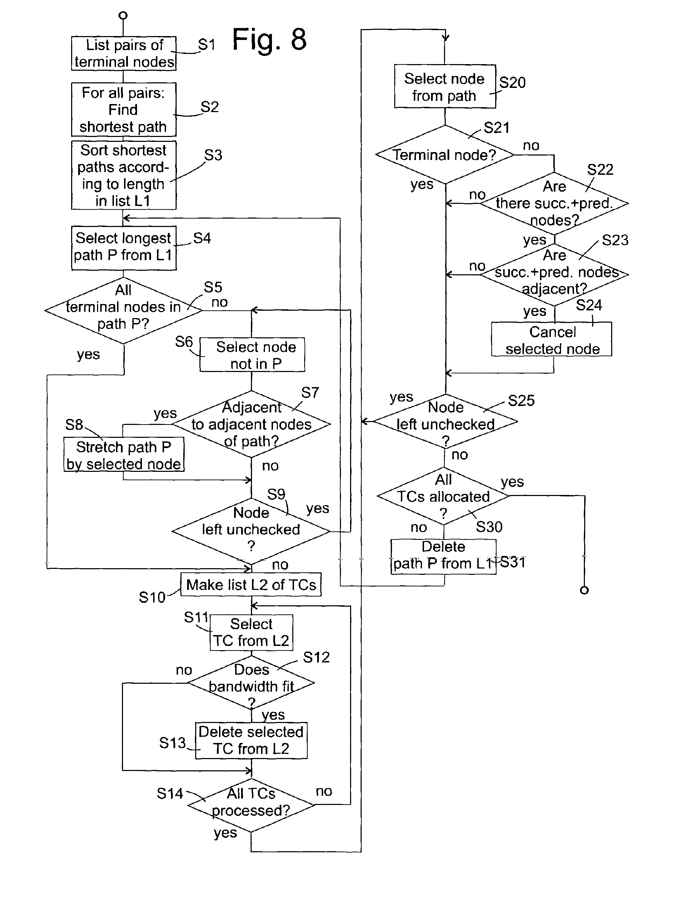

In a first step S1 (cf. Fig. 8) of the method, a list is established which comprises all possible pairs AB, AD, AE, AF, AI, BD, ..., FI of terminal nodes. For each pair the shortest path between its two nodes is determined in step S2 according to any appropriate prior art algorithm, e.g. an algorithm of the "shortest path first" type. The pairs are then sorted according to path length in Step S3, yielding a list, the beginning of which is shown in Fig. 2. The longest one among the various shortest paths is A → E, which includes five nodes. It is selected in step S4 as a first path for deriving a bus from it. In the network of Fig. 3, this path is represented by solid data lines between its nodes.

In the next step S5, it is checked whether all terminal nodes are part of the path. It is found that node G is not. The path selected in S4 is therefore not yet complete and will be referred to as a preliminary path. In order to obtain a bus that connects all terminal nodes, the preliminary path of Fig. 3 must be stretched, and the method proceeds to step S6.

The stretching procedure is illustrated referring to Figs. 4 and 5. In a predefined arbitrary order, e. g. in alphabetical order of the letters designating the nodes, a loop is executed which comprises the steps S6 of selecting a node which is not yet part of the preliminary path, and S7 of checking whether the selected node is adjacent to two mutually adjacent nodes of the preliminary path.

If e.g. node F is selected in S6, it is found in S7 that it is adjacent to nodes A and B. In such a case, the preliminary path is extended in step S8 by removing from it the data line connecting nodes A and B, and replacing this data line by node F and the two data lines connecting it to nodes A and B.

In a subsequent execution of the loop, it is found that node G can be inserted in a similar way between nodes C and D. In case of node I, there are two alternatives: either between nodes F and B or between B and C. In such a case, one of the two alternatives may be selected arbitrarily, or secondary criteria, such as the resulting path length in kilometres may be optimised. If existing traffic load on individual data lines is known, node I might also be connected to the preliminary path using those data lines where current traffic load is lowest.

The last node checked is H. It is not included in the path, because there are no two mutually adjacent nodes to which H is adjacent and between which it might be inserted.

Fig. 5 shows the path that results from this procedure. Since it comprises all terminal nodes, it will be referred to here as a bus.

The above method is effective because in the present example more than half of the nodes A to I of the network are terminal nodes and must therefore be included in the bus. If the number of terminal nodes is small with respect to the total number of nodes in the network, there is a risk that based on the above procedure the path will become far longer than necessary before all terminal nodes are incorporated in it. This problem can be avoided in two ways. The first is to carry out a re-contraction of the bus after having incorporated all terminal nodes in it; this procedure will be explained further below. The second is to modify the stretching procedure of steps S6 to S9 described above as follows: at first, a terminal node is selected which is not yet part of the preliminary path. Then, shortest path sections from this new terminal node to all terminal nodes of the candidate path are calculated, and based on these, for each pair of terminal nodes of the candidate path that have no other terminal node between them in the preliminary path, the path section length from the first terminal node of the pair to the new terminal node and from the new terminal node to the second node of the pair are added, and the distance between the nodes of the pair along the preliminary path is subtracted from the sum. The new node is inserted between those two terminal nodes for which the result is lowest.

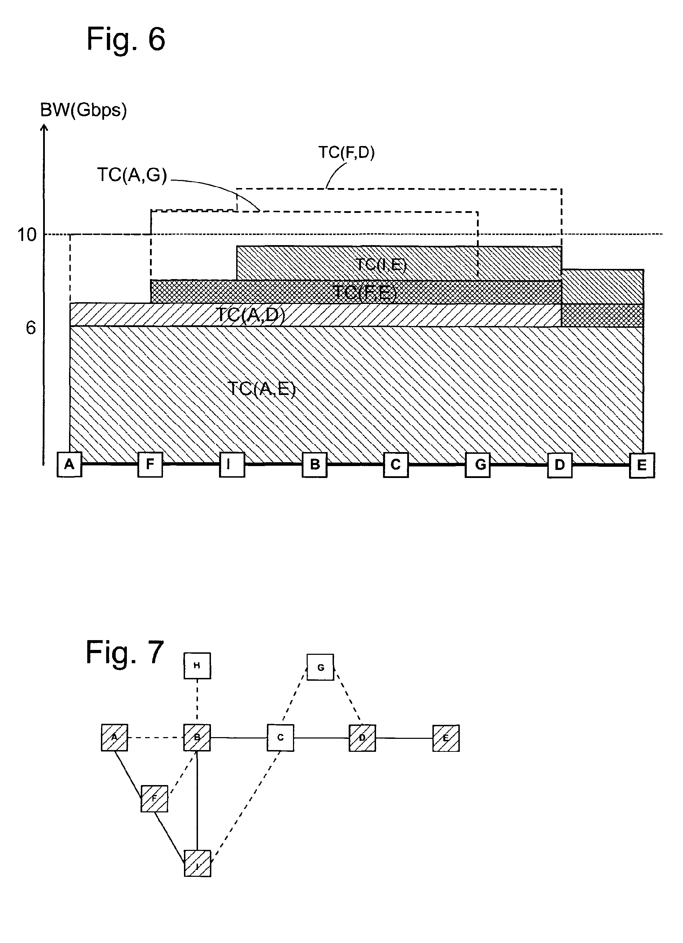

When a bus has been determined in this way, traffic is routed on it by assigning traffic connections to it. This procedure is illustrated by Fig. 6. First, a list L2 of all traffic connections is established (S10), in which the traffic connections are sorted according to a suitably defined priority. If the main interest is to achieve high data rates on the bus, the priority is equivalent to the data rate of a given traffic connection, but other types of priority, e.g. the length of the traffic connections, may be used wherever appropriate. It is assumed as an example that sorting the traffic communications yields the following list L2:
TC (AE) = 6 Gbps
TC (AD) = 1 Gbps
TC (FE) = 1 Gbps
TC (AG) = 3 Gbps
TC (FD) = 4 Gbps
TC (IE) = 1,5 Gbps
etc.

In the present example, the bus is assumed to have a constant bandwidth of 10 Gbps in every data line, but this is not a necessary limitation. To be more specific, in a WDM transmission infrastructure, a bus will usually be formed of one wavelength from the several wavelengths transmitted in one optical fibre, but it might comprise a higher number of wavelengths, if desired.

In step S11, the first traffic connection TC(A,E) of the list is selected, and is found in step S12 to fit into the bandwidth of every data line of the bus. Accordingly it is deleted from the list L2 (S13). In step S14, the procedure checks whether there are traffic connections in L2 that have not yet been processed. Since there are, the procedure returns to S11 to select the next traffic connection TC(A,D) from the list L2. TC(A,D) is found to fit into the available bandwidth, too. The same applies to the next traffic connection TC(FE).

Now the first of the remaining traffic connections is TC(A,G), the bandwidth of which is 3 Gbps. It is found in S12 to exceed the available bandwidth between nodes F and I and can therefore not be allocated. It is therefore left in the list, and the next connection TC(F,D) from the list is tried. It is found to exceed the available bandwidth in all data lines, so that it cannot be allocated either. The next traffic connection TC(I,E) fits into the bandwidth in each data line and can therefore be allocated.

Steps S11 to S14 are thus repeated until either all traffic connections of the list have been processed or the remaining bandwidth in of of the data lines of the bus is less than a minimum bandwidth of the traffic connections.

Due to the stretching method used for incorporating all terminal nodes in bus, it is quite probable that a bus found by the stretching method is not the shortest path which connects all terminal nodes in a given order. Therefore, before operating the bus, an attempt should be made to reduce its length. This is done in steps S20, S21 by checking for each node of the bus whether it is a terminal node, and, if not, checking in S22, S23 whether it has successor and predecessor nodes in the bus that are adjacent to each other. In the bus A,F,I,B,C,G,D,E of Fig. 5, nodes C and G are not terminal nodes. Node C has node B for predecessor and node G for successor node, but these two nodes are not adjacent to each other. Therefore, it is determined in S23 that node C can not be removed from the bus. Node G has node C for a predecessor and node D for a successor, and a data line exists between these two nodes. Therefore, node G can be removed from the bus in step S25 by routing the path along the data line between C and D. After checking all nodes in this way, the bus A,F,I,B,C,D,E shown in Fig. 8 is obtained.

If it is found in step S30 that all traffic connections have been allocated, i.e. list L2 is empty, the process is finished.

If traffic connections remain to be allocated, another bus must be established for these. In that case, the path P from which the bus was derived is removed from the list L1 in step S31, and the procedure returns to step S4, where the longest one among the remaining paths of list L1 is selected, and the procedure of extending the selected path into a bus and assigning traffic to it is repeated.

## Claims

1. A method for routing traffic in a network comprising a plurality of nodes (A, B, ..., I) and a plurality of data lines that extend between adjacent ones of said nodes, the traffic being formed of traffic connections (TC(A,E), TC(A,D), ...) between pairs of said nodes referred to as terminal nodes (A, B, D, E, F, I), the method comprising the steps of
a) selecting a pair of said terminal nodes and determining a shortest path between them (S1-S4);
b) selecting (S6) a new node from said plurality which is not part of the path and inserting (S8) the new node between two adjacent nodes of the path;
c) repeating step b) until at least all terminal nodes are included in the path;
d) routing at least part of said traffic on said path.

2. The method of claim 1, wherein step a) comprises the steps of
aa) establishing a set of pairs of terminal nodes (S1);
ab) determining the shortest path between its nodes for each terminal node pair (S2); and
ac) selecting, among all terminal node pairs not yet selected, a pair for which the path is longest (S4).

3. The method of claim 2, in which the terminal node pair set comprises all possible combinations of two terminal nodes.

4. The method of any of the preceding claims, wherein in step b) a node is selected as the new node only if it is a terminal node.

5. The method of claim 4, wherein step b) comprises the steps of calculating the shortest bypass between two nodes which are adjacent in the current path, which bypass extends from one of the two nodes to the other via the new node, and of inserting the bypass between said two nodes.

6. The method of any of the claims 1 to 3, wherein in step b) a node is selected as the new node (S7) if it is adjacent to two mutually adjacent nodes of the path and is inserted (S8) between these mutually adjacent nodes.

7. The method of any of the preceding claims, wherein the traffic is a set of traffic connections (TC(A,E), TC (A, D), ...) between pairs of said terminal nodes, wherein in step d) some of the traffic connections of said set are routed on said path and are removed from the set, yielding a diminished set, and if said diminished set is not empty, steps a) to d) are repeated using said diminished set as said traffic.

8. The method of any of the preceding claims, further comprising the steps of
e) checking (S21), for every node of the path, whether it is a terminal node, and, if not,
f) checking (S22, S23) whether the node can be removed from the path without destroying the connectivity of the path, and, if yes,
g) removing (S24) the node from the path.

9. The method of claim 8, wherein steps e) to g) are carried out between steps c) and d).

10. The method of claim 8, wherein steps e) to g) are carried out after step d).

11. The method of any of claims 8 to 10, wherein in step f) it is found that the node can be removed if the path comprises a predecessor and a successor node of said node (S22), and if the predecessor and successor nodes are mutually adjacent (S23).

12. The method of any of claims 8 to 10, wherein in step f) it is found that the node can be removed if it is not a terminal node, and if a path section exists between a predecessor terminal node and a successor terminal node of the node in question which is shorter than the corresponding path section of the current path.
